# EUROPÄISCHE PATENTSCHRIFT

(11) **EP 0 530 602 B1**
(45) Veröffentlichungstag und Bekanntmachung des Hinweises auf die Patenterteilung: **03.05.2000**
(21) Anmeldenummer: 92114212.1
(22) Anmeldetag: 20.08.1992
(51) Int. Cl.: C08L 63/00

(54) **Verfahren zur Herstellung von wässrigen Epoxidharz-Dispersionen**
Processes of preparation of aqueous epoxy resin dispersions
Procédé de préparation de dispersions aqueuses de résine époxy

(30) Priorität: 28.08.1991 DE 4128487
(43) Veröffentlichungstag der Anmeldung: 10.03.1993
(73) Patentinhaber: HOECHST AKTIENGESELLSCHAFT, 65926 Frankfurt am Main (DE)
(72) Erfinder: Dreischhoff, Dieter, W-6200 Wiesbaden (DE); Geisler, Joerg-Peter, Dr., W-6507 Ingelheim (DE); Godau, Claus, Di., W-6229 Kiedrich (DE); Hönel, Michael, Dr., W-6200 Wiesbaden (DE)
(74) Vertreter: Zounek, Nikolai, Dipl.-Ing.

(56) Entgegenhaltungen:
- EP-A- 0 081 163
- EP-A- 0 272 595
- EP-A- 0 350 232
- Handbook of Epoxy Resins, Lee and Neville, 1982, McGraw-Hill Verlag, Seiten 16-1 bis 16-7

## Beschreibung

Aus der deutschen Offenlegungsschrift 36 43 751 sind bereits wäßrige Epoxidharz-Dispersionen bekannt, die in Gegenwart eines Kondensationsprodukts aus einem aliphatischen Polyol und einer Epoxidverbindung als Emulgator hergestellt werden. Diese wäßrigen Dispersionen enthalten jedoch neben Wasser immer auch eine gewisse Menge an organischen Lösemitteln. Es wurde nun gefunden, daß man diese Menge an Lösemittel noch weiter reduzieren und darüber hinaus auch bestimmte anwendungstechnische Eigenschaften bei dieser Art von wäßrigen Epoxidharz-Dispersionen noch verbessern kann, wenn man nicht, wie in DE-36 43 751 beschrieben, das Epoxidharz in Gegenwart des Emulgators herstellt, sondern das Epoxidharz für sich herstellt und den Emulgator erst nach Fertigstellung des Epoxidharzes zugibt.

Gegenstand der Erfindung ist somit ein Verfahren zur Herstellung von wäßrigen Epoxidharz-Dispersionen, dadurch gekennzeichnet, daß in der ersten Stufe ein Epoxidharz (1) durch Kondensation eines Gemisches bestehend aus
(1a) 50 bis 95 Gew.-% einer oder mehrerer Epoxidverbindungen mit im Mittel mindestens einer Epoxidgruppe pro Molekül und einem Epoxidäquivalentgewicht von 90 bis 3000 g/mol und
(1b) 5 bis 50 Gew.-% eines aromatischen Polyols
bei 100 bis 220 °C in Gegenwart eines Katalysators hergestellt wird;
anschließend in der zweiten Stufe bei einer Temperatur von 60 bis 200 °C dem Epoxidharz (1) ein Emulgator (2) zugegeben wird, enthaltend ein Kondensationsprodukt (2a) von
- einem aliphatischen Polyol mit einem mittleren Molekulargewicht (Mw) von 200 bis 20000 g/mol, und
- einer Epoxidverbindung mit mindestens zwei Epoxidgruppen pro Molekül und einem Epoxidäquivalentgewicht von 90 bis 3000 g/mol,
wobei das Äquivalentverhältnis der OH-Gruppen zu den Epoxidgruppen 1 : 0,85 bis 1 : 1,5 ist und das Epoxidäquivalentgewicht dieses Kondensationsproduktes zwischen 5000 und 400000 g/mol liegt, und schließlich
in der letzten Stufe Wasser (4) in der an 100 Gew.-% fehlenden Menge unter kräftigem Rühren hinzugegeben wird, wobei der Anteil des Epoxidharzes (1) an dem Gewicht der gesamten Dispersion 20 bis 75 %, und der Anteil des Emulgators (2) an dem Gewicht der gesamten Dispersion 3 bis 20 % beträgt, und der Emulgator (2) Massenanteile von 20 bis 100 % des Kondensationsprodukts (2a), 0 bis 50 % eines organischen Lösungsmittels und 0 bis 80 % Wasser enthalt.

Dieses Verfahren besteht darin, daß man das Epoxidharz (1) zunächst mit dem Emulgator (2) sowie gegebenenfalls organischen Lösemitteln gemäß (3) und anschließend mit Wasser verrührt.

Das Epoxidharz entsprechend (1) der erfindungsgemäßen Dispersionen besitzt vorzugsweise ein Epoxidäquivalentgewicht von 350 bis 4000, insbesondere von 400 bis 3000 g/mol. Die mittlere Teilchengröße des dispergierten Harzes ist in der Regel nicht höher als 1,0 µm und beträgt vorzugsweise 0,2 bis 0,8 µm. Der Anteil dieses Harzes in der Gesamtdispersion beträgt 20 bis 75 Gew.-%, vorzugsweise etwa 25 bis 65 Gew.-%.

Bei den 1,2-Epoxidverbindungen entsprechend (1) a) und (2) a) handelt es sich um Polyepoxide mit im Mittel mindestens mehr als einer, vorzugsweise mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 90 und 500, insbesondere zwischen 100 und 350 g/mol.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenol, Bis-(4-hydroxyphenyl)-1,1-ethan, 2,2-Bis[4-(2-Hydroxypropoxy)phenyl]-propan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u. a. sowie die Halogenierungs- und Hydrierungsprodukte der vorstehend genannten Verbindungen. Bisphenol A ist hierbei besonders bevorzugt.

Als Beispiele für mehrwertige Alkohole seien Ethylenglykol, Diethylenglykol, Triethylenglykol, Polyethylenglykole (n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentanglykol, Cyclohexandimethanol, Trimethylolethan, Trimethylolpropan und Umsetzungsprodukte von aliphatischen oder aromatischen Polyolen, beispielsweise Trimethylolpropan oder Bisphenol A, mit Ethylenoxid und/oder Propylenoxid genannt. Polypropylenglykole (n = 8 - 10), Cyclohexandimethanol, sowie Umsetzungsprodukte von Bisphenol A mit Propylenoxid, sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A. M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als aromatische Polyole entsprechend (1)b) kommen vorzugsweise die aromatischen OH-gruppenhaltigen Verbindungen in Frage, die vorstehend bei den Komponenten (1)a) und (2)a) beschrieben wurden, also mehrwertige, vorzugsweise zweiwertige Phenole, deren Halogenierungsprodukte und/oder Novolake. Besonders bevorzugt ist auch hier Bisphenol A.

Bei den aliphatischen Polyolen der Komponente (2)a) handelt es sich vorzugsweise um Polyetherpolyole (Polyalkylenglykole) mit mittleren Molekulargewichten (Mw; Gelpermeationschromatographie; Polystyrolstandard) von bevorzugt zwischen 600 und 12000, insbesondere 2000 bis 8000 und OH-Zahlen zweckmäßigerweise von 10 bis 600, bevorzugt 15 bis 120. Diese Polyetherpolyole besitzen vorzugsweise nur endständige, primäre OH-Gruppen. Beispielsweise seien hier Blockcopolymere aus Ethylenoxid und Propylenoxid sowie Polyethylen-, Polypropylen-, Polybutylglykole genannt, wobei auch Gemische der jeweiligen Polyalkylenglykole eingesetzt werden können. Vorzugsweise werden Polyethylenglykole verwendet.

Vorzugsweise wird das Dispergiermittel (2)a) durch Kondensation der genannten Polyetherpolyole mit den Polyglycidylethern in Gegenwart geeigneter Katalysatoren bei 50 bis 200 °C, vorzugsweise bei 90 bis 170 °C, hergestellt, wobei das Äquivalentverhältnis der OH-Gruppen zu den Epoxidgruppen 1 : 0,85 bis 1 : 1,5, vorzugsweise 1 : 0,95 bis 1 : 1,25 und das Epoxidäquivalentgewicht des Kondensationsproduktes mindestens 5000 g/mol, vorzugsweise 100000 g/mol bis 400000 g/mol beträgt.

Als Katalysatoren für die Herstellung des Dispergiermittels (2)a) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natrium- und Lithiumstearat. Ebenfalls geeignet sind starke anorganische und organische Protonsäuren, zum Beispiel Phosphorsäure, Schwefelsäure, Tetrafluorborsäure und Benzolsulfonsäure. Ferner können als Katalysatoren Lewis-Säuren verwendet werden. Als Beispiele seien genannt Zinn(IV)tetrachlorid, Titan(IV)tetrachlorid, Titan(IV)tetraisopropylat, Triethyloxoniumtetrafluoroborat sowie Bortrifluorid und seine Komplexe, zum Beispiel mit Phosphorsäure, Essigsäure (1 : 1 und 1 : 2), Methanol, Diethylether, Tetrahydrofuran, Phenol, Ethylenglykolmonoethylether, Polyethylenglykol (MG 200), Dimethylsulfoxyd, Di-n-Butylether, Di-n-Hexylether, Bernsteinsäure und aliphatische, cycloaliphatische, araliphatische Amine sowie Stickstoff-Heterocyclen.

Bevorzugt werden als Katalysatoren BF₃-Diethylether, BF₃-Essigsäure und wäßrige Tetrafluorborsäure eingesetzt. Die Menge an Katalysator beträgt im allgemeinen 0,1 bis 5, vorzugsweise 0,1 bis 1 Gew.-%, bezogen auf das Reaktionsgemisch. Zur besseren Dosierung kann der Katalysator in einem Lösungsmittel wie Diethylether, einem Glykol- oder cyclischen Ether, Ketonen und dergleichen verdünnt werden.

Zur Herstellung des Dispergiermittels erwärmt man die umzusetzenden Gemische aus Hydroxylgruppen und Epoxidgruppen enthaltenden Verbindungen bis zu der Temperatur, bei der die Kondensation mit ausreichender Geschwindigkeit d. h. in 30 min bis 5 Stunden, abläuft. Die Umsetzung verfolgt man zweckmäßig über die Zunahme des Epoxidäquivalents, das eine Verminderung der Epoxidgruppen anzeigt. Die Reaktion kann durch Kühlung unter die Reaktionstemperatur abgebrochen werden.

Das so gewonnene Kondensationsprodukt (2)a) kann als solches (100%ig) als Dispergiermittel (2) zur Herstellung der Epoxidharz-Dispersionen verwendet werden. Vorzugsweise wird jedoch aus Gründen der besseren Handhabbarkeit eine Mischung von 20 bis 99, vorzugsweise 40 bis 60 % des Kondensationsproduktes (2)a) und einem wäßrigen Medium, bestehend aus (bezogen auf die gesamte Mischung) bis zu 50, vorzugsweise bis zu 30 %, eines organischen Lösungsmittels (2)b) und 1 bis 80 %, vorzugsweise 15 bis 60 %, Wasser (2)c) hergestellt und diese Mischung als Emulgator (2) verwendet. Als organische Lösungsmittel entsprechend der Komponente (2)b) kommen insbesondere Glykole, Mono- und Diether- und -ester von Glykolen mit Alkoholen und Säuren, aliphatische Alkohole mit gegebenenfalls verzweigten Alyklresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Ethylenglykol, Ethylenglykolmonomethylether, Ethylenglykoldimethylether, Diethylenglykoldimethylether, Propylenglykol, Propylenglykolmonomethylether, Propylenglykoldimethylether, Butylglykol, Butyldiglykol, Methoxypropanol, Ethoxypropanol, Ethanol, 1- und 2-Propanol, Butanol, Cyclohexanol, Diacetonalkohol, Benzylalkohol, Essigsäureethylester, Aceton sowie Methylisobutylketon. Bevorzugt werden Butylglykol, Methoxypropanol, Ethoxypropanol, 2-Propanol und/oder Benzylalkohol eingesetzt.

Die Epoxidharz-Dispersionen enthalten vorzugsweise 4 bis 15 Gew.-% des Emulgators (2).

Als organische Lösungsmittel gemäß der Komponente (3) kommen ebenfalls die oben genannten Lösungsmittel entsprechend (2)b) in Frage, ferner können auch weniger wasservermischbare und/oder wasserunlösliche Lösungsmittel verwendet werden. Als Beispiele seien Aromaten, wie Toluol oder Xylol, Ketone, wie Methoxyhexanon oder Cyclohexanon und Ester, wie 3-Ethoxypropionsäureethylester genannt. Die Lösungsmittel können einzeln oder im Gemisch eingesetzt werden. Bevorzugte Lösungsmittel sind wiederum Butylglykol, Methoxypropanol, Ethoxypropanol, 2-Propanol und/oder Benzylalkohol.

Der Gesamtgehalt an organischen Lösungsmitteln in der Dispersion, berechnet als die Summe der Lösungsmittelmengen (2)b) und (3), beträgt bis zu 10 Gew.-%, bezogen auf die gesamte Dispersion, vorzugsweise weniger als 6 Gew.-%.

Als übliche Zusatzstoffe, die eventuell in den Kombinationen vorhanden sein können, seien hier beispielsweise die üblichen Lackadditive wie Pigmente, Pigmentpasten, Antioxidantien, Verlaufs- bzw. Verdickungsmittel, Entschäumer und/oder Netzmittel, Reaktivverdünner, Füllstoffe, Katalysatoren, Konservierungsmittel, Schutzkolloide udgl. genannt. Diese Additive, wie auch die nachfolgend beschriebenen Härter und weiteren härtbaren Harze, können der Dispersion gegebenenfalls erst unmittelbar vor der Verarbeitung zugegeben werden.

Als Härter für die Epoxidharze können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymeren, wie Polyepoxiden und Polyamidoaminen.

Weiterhin können saure Härtungsmittel (Säurehärter) wie Polycarbonsäuren und ihre Anhydride sowie mehrwertige Phenole Anwendung finden. Auch hydroxyl- und/oder aminogruppenhaltige Kunstharze wie Amin- oder Phenolharze sind für diesen Zweck geeignet.

Die Härtung der Epoxidharzdispersionen ist ferner durch sogenannte latente Härtungsmittel, d.h. Verbindungen, die erst bei höherer Temperatur, beispielsweise bei 60 bis 250 °C, ihre vernetzende Wirkung gegenüber Epoxidverbindungen entfalten, möglich. Beispiele für solche Härter sind Harnstoff, Dicyandiamid, Imidazol, Guanidin, Hydrazid und Derivate der genannten Verbindungen. Bevorzugt wird von diesen latenten Härtungsmitteln Dicyandiamid eingesetzt.

Beispiele für basische Härtungsmittel, vorzugsweise für die Härtung bei Raumtemperatur und/oder niedrigeren Temperaturen (Aminkalthärter), die allgemein im Äquivalentverhältnis Epoxidäquivalent zu Aminwasserstoffäquivalent von 1 zu (0,75 bis 2,0) eingesetzt werden, sind Polyalkylenamine, wie Diethylentriamin, Triethylentetramin, Tetraethylenpentamin, Pentaethylenhexamin u.a., ferner 2,2,4- und/oder 2,4,4-Trimethylhexamethylendiamin, Bis-(3-aminopropyl)-amin, 1,4-Bis-(3-aminopropyl)-piperazin, N,N-Bis(3-aminopropyl)-ethylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diethylcyclohexan, 1,2-Diamino-4-ethylcyclohexan, 1,4-Diamino-3,6-diethylcyclohexan, 1-Cyclohexyl-3,4-diaminocyclohexan, Isophorondiamin und Umsetzungsprodukte davon, 4,4'-Diaminodicyclohexyl-methan und -propan, 2,2-Bis(4-aminocyclohexyl)-methan und propan, 3,3'-Dimethyl-4,4'-diaminodicyclohexylmethan, 3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin oder deren Hydrierungsprodukte.

Die genannten Amine können allein oder als Gemische verwendet werden.

Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 4,4'-Dihydroxydiphenyl-2,2-propan, vorzugsweise aber Phenol oder Nonylphenol hergestellt.

Als Amin-Epoxyd-Addukte kommen beispielsweise Umsetzungsprodukte von Polyaminen, wie z.B. Ethylendiamin, Propylendiamin, Hexamethylendiamin, 2,2,4-, 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidylethern wie Phenylglycidylether, tert.-Butylglycidylether, Ethylhexylglycidylether, Butylglycidylether oder mit Glycidylestern, wie dem von der Firma Shell vertriebenen Glycidylester der Versaticsäure, Cardura E, oder den unter (1)a) bzw. (1)b) genannten Polyglycidylethern und -estern in Betracht.

Polyamidoamine, die zur Härtung der Epoxidharzdispersionen verwendet werden können, werden beispielsweise durch Umsetzung von Polyaminen mit Mono- oder Polycarbonsäuren, z.B. dimerisierten Fettsäuren, erhalten.

Bevorzugt werden als Aminhärter neben den oben genannten Polyaminen wasserlösliche Polyoxyalkylendi- und -polyamine mit Molgewichten von 100 bis 2000, z.B. die von der Firma Texaco unter dem Warenzeichen Jeffamine vertriebenen Produkte, sowie die leicht in Wasser dispergierbaren Härtungsmittel, wie sie in der DE-Auslegeschrift 23 32 177 und der EP-Patentschrift 0 000 605 beschrieben sind, also z.B. modifizierte Amin-Addukte, eingesetzt.

Zur Erzielung einer schnelleren und/oder vollständigeren Durchhärtung können die aus den Epoxidharzdispersionen mit den genannten Aminhärtern erhältlichen Beschichtungen 15 bis 120 Minuten auf 50 bis 120 °C erhitzt werden.

Als saure Härtungsmittel, die im allgemeinen im Äquivalentverhältnis Epoxidäquivalent zu Carboxyläquivalent von 1 zu (0,75 bis 2) eingesetzt werden, eignen sich wasserlösliche oder wassermischbare Polycarbonsäuren. Beispiele für solche Polycarbonsäuren sind Cyclopentantetracarbonsäure, Cyclobutantetracarbonsäure, 1,2,3,4-Tetrabutancarbonsäure, Weinsäure, Malonsäure, Äpfelsäure, Zitronensäure, Aconitsäure u.a. Ferner sind gegebenenfalls Anhydride oder saure Ester dieser Säuren mit mehrwertigen Alkoholen mit 2 bis 12, vorzugsweise 2 bis 6 C-Atomen, wie beispielsweise Neopentylglykol, Glycerin, Trimethylol-ethan oder -propan, den Alkandiolen und deren Oligomeren, die gegebenenfalls eine oder mehrere Etherbrücken enthalten, wie Ethylenglykol, Propan- und Butandiole, geeignet, wobei die Ester stets mindestens zwei freie Carboxylgruppen aufweisen. Es ist auch möglich, saure Ester mit zwei oder mehr Carboxylgruppen von Carbonsäuren, wie beispielsweise Pyromellithsäure, Trimellithsäure, Phthalsäure, Endomethylentetra- oder hexahydrophthalsäure, Maleinsäure, Fumarsäure bzw. deren Anhydriden, sofern diese existieren, mit mehrwertigen Alkoholen, z.B. den vorstehend geannnten, als Polycarbonsäurehärter zu verwenden, sofern diese sauren Ester eine ausreichende Wasserlöslichkeit bzw. Wasserverdünnbarkeit besitzen. Bevorzugt werden als saure Härtungsmittel Polycarbonsäuren eingesetzt.

Die Härtung der Epoxidharzdispersionen mit den genannten sauren Härtungsmitteln erfolgt zweckmäßigerweise bei höheren Temperaturen, z.B. bei 60 bis 220 °C, vorzugsweise bei 80 bis 200 °C, in 15 bis 150 Minuten. Zur Erzielung einer vollständigeren Durchhärtung bzw. zur Senkung der für eine ausreichende Durchhärtung erforderlichen Temperaturen können den genannten sauren Härtern noch geringe Mengen von Verbindungen beigegeben werden, die die Umsetzung Carboxylgruppe/Epoxidgruppe katalysieren. Geeignete Verbindungen sind beispielsweise starke Protonsäuren wie Phosphorsäure oder para-Toluolsulfonsäure, tertiäre Amine wie Triethylamin, N,N-Dimethylbenzylamin, Stickstoffheterocyclen wie Imidazol, Pyridin und deren Derivate, Trialkyl- und -arylphosphine sowie entsprechende Phosphoniumverbindungen und Metallsalze bzw. - chelate wie zum Beispiel Zinn(II)octoat.

Anstelle oder zusätzlich zu den vorstehend beschriebenen Härtern können zur Härtung auch Amin- und/oder Phenolharze Verwendung finden, die in Mengen von 5 bis 50 Gew.-%, vorzugsweise 10 bis 35 Gew.-%, bezogen auf den Gesamtfeststoffgehalt, eingesetzt werden. Gegebenenfalls wird die Dispersion dabei noch durch zusätzliches Wasser auf einen Gesamtfeststoffgehalt von 10 bis 80 Gew.-% eingestellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Acetoguanaminharze) oder ähnlichen Verbindungen bzw. entsprechende Präkondensate. Bevorzugte Aldehydkondensationsprodukte des Melamins sind vor allem die Melamin-Methylol-Alkylether, wobei die Alkylreste Methyl, n- oder i-Butylgruppen, bevorzugt Methylgruppen sind, wie Hexamethoxymethylmelamin, Ethoxymethoxymethylmelamin, Monomethylolpentamethoxymethylmelamin, Dimethyloltetramethoxymethylenmelamin, Trimethylol-trimethoxymethylenmelamin und dergleichen mit weitgehend monomerer Struktur sowie entsprechende oligomere oder polymere Produkte.

Als Phenolharzhärter seien Resole, Formaldehyd-Phenolcarbonsäureharze und Phenolharzvorprodukte genannt, wobei die handelsüblichen veretherten, mit Wasser verdünnbaren Phenolharzresole bevorzugt sind.

Gegebenenfalls kann man den Phenol- und/oder Aminharz enthaltenden Dispersionen auch saure Katalysatoren, wie para-Toluolsulfonsäure, Cyclohexansulfaminsäure, saures Butylphosphat und Phosphorsäure - gegebenenfalls auch als (Amin)salze - zusetzen, um die Geschwindigkeit der Härtungsreaktion zu beschleunigen, so daß man Filme oder Überzüge erzeugt, die bei niedriger Temperatur oder in kürzerer Zeit aushärten. Die Menge dieser sauren Katalysatoren beträgt z.B. 2 Gew.-%, bezogen auf den Gesamtfeststoffgehalt.

Zusätzliche härtbare Harze sind beispielsweise in wäßrigen Medien dispergierbare Harze auf Basis von Hydroxyalkylacrylester, Hydroxyalkyden, Polyestern, Epoxidharzen und dergleichen. Der Anteil dieser Zusätze kann beispielsweise so bemessen werden, daß der Gesamtfeststoffgehalt des Gemisches etwa 10 bis 80, vorzugsweise 20 bis 40 Gew.-%, beträgt. Durch den Zusatz solcher Harze können die Eigenschaften der aus den Dispersionen hergestellten Produkte in mannigfaltiger Weise beeinflußt werden. So ist es z.B. möglich, durch den Zusatz von Acrylatharzen die Vergilbungsbeständigkeit zu erhöhen, während bei Anwesenheit von Alkydharzen die Elastizität der daraus hergestellten Beschichtungen deutlich verbessert wird.

Der Gesamtfeststoffgehalt der Epoxidharzdispersionen kann zwischen 10 und 80 Gew.-% betragen, zweckmäßigerweise liegt er zwischen 35 und 70 Gew .-% und vorzugsweise zwischen 45 und 65 Gew.-%. Der Gehalt an Wasser beträgt vorzugsweise 20 bis 80, insbesondere 30 bis 60 Gew.-%.

Die Viskosität dieser Dispersionen beträgt im allgemeinen zwischen 200 und 30000 mPa.s, vorzugsweise zwischen 750 und 7000 mPa.s.

Die nach dem erfindungsgemäßen Verfahren hergestellten Epoxidharz-Dispersionen zeichnen sich zum einen durch ihre gute Lagerstabilität aus, die auf die für Sekundärdispersionen geringe mittlere Teilchengröße zurückzuführen ist, ferner insbesondere durch ihren sehr geringen oder fehlenden Gehalt an organischen Lösungsmitteln. Verglichen mit bereits bekannten Epoxidharzdispersionen besitzen die Beschichtungen, die mit nach dem erfindungsgemäßen Verfahren hergestellten Dispersionen gemacht werden, außerdem eine Reihe technologischer Vorteile, z.B. sehr geringe Wasserempfindlichkeit, sehr gute Elastizität bei gleichzeitig verbesserter Härte, gute bis sehr gute Haftung auf den unterschiedlichsten Substraten, hervorragende Korrosionsschutzwirkung bei Beschichtung metallischer Materialien, u.a.

Zur Herstellung der Epoxidharzdispersionen nach dem erfindungsgemäßen Verfahren wird zunächst das Epoxidharz (1) durch Kondensation der Komponenten (1)a) und (1)b) bei erhöhten Temperaturen, im allgemeinen bei 100 bis 220 °C, vorzugsweise bei 150 bis 180 °C, in Gegenwart eines die Kondensation beschleunigenden Katalysators hergestellt.

Werden zwei oder mehrere Epoxidverbindungen (1)a) eingesetzt, so wird die Kondensationsreaktion vorzugsweise in zwei Stufen dergestalt durchgeführt, daß in einer ersten Reaktion eine oder mehrere Komponenten (1)a) mit den Komponenten gemäß (1)b) in einem Mengenverhältnis umgesetzt werden, daß dieses erste Kondensationsprodukt ein Epoxid-Äquivalentgewicht von größer 5000 g/mol, vorzugsweise größer 20000 g/mol, besitzt und noch freie phenolische Gruppen aufweist, und in einer weiteren Kondensationsreaktion dieses erste Kondensationsprodukt mit weiteren Epoxidverbindungen gemäß (1)a) umgesetzt wird, so daß schließlich das gewünschte Epoxidharz (1) erhalten wird.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat und Lewis-Säuren, wie z.B. Bortriflurid und seine Komplexe, Titantetrachlorid, Zinnchlorid und Triethyloxoniumtetrafluoroborat.

Anschließend werden dem Epoxidharz (1) das Dispergiermittel (2) und gegebenenfalls organische Lösungsmittel gemäß (3) zugegeben und einige Zelt, vorzugsweise während 15 bis 180, insbesondere 30 bis 90 Minuten, verrührt. Die Zugabe des Dispergiermittels erfolgt bevorzugt bei 60 bis 200 °C, vorzugsweise 70 bis 120 °C.

Danach wird die entsprechende Menge an Wasser (4), vorzugsweise in mehreren Teilmengen, unter kräftigem Rühren zudosiert, wodurch die wäßrige Dispersion entsteht. Auch die Zugabe des Wassers erfolgt vorzugsweise bei erhöhten Temperaturen, beispielsweise bei 30 bis 100 °C, vorzugsweise bei 50 bis 90 °C.

Die Dispergierung des Epoxidharzes (1) in Wasser erfolgt zweckmäßigerweise mit geeigneten Dispergierapparaten, beispielsweise mit einem schnell-laufenden Flügelrührer, einem Mehrimpulswendelrührer, einer Kolloidmühle, einem Homogenisator, einem Dissolver oder einem sonstigen Schnellmischer mit einer hohen Scherkraft.

Die Härter und weiteren härtbaren Harze werden vorzugsweise erst unmittelbar vor der Anwendung der Dispersion zugegeben.

Aufgrund ihrer bereits angesprochenen hervorragenden technologischen Eigenschaften, beispielsweise hinsichtlich Haftung, Härte, Korrosionsschutzwirkung, Wasser- und Chemikalienbeständigkeit u.a., eignen sich die Dispersionen, wie sie nach dem erfindungsgemäßen Verfahren erhalten werden, in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyethylen, Polypropylen usw.), Kompositwerkstoffen, Keramik und vorbehandelten oder nicht vorbehandelten Metallen verwendet werden. Aufgrund ihrer günstigen Eigenschaften sind die Dispersionen auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Eine weitere Möglichkeit ist die Verwendung der Dispersionen zur Herstellung wasserverdünnbarer Klebstoffe. Sie können auch als Bindemittel für textile, organische und/oder anorganische Materialien und als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen. Die Beschichtungen werden, sofern keine Härtungsmittel für die Kalthärtung mitverwendet werden, durch Erhitzen auf 80 bis 250 °C für eine zum Aushärten ausreichende Zeit, im allgemeinen 5 bis 60 Minuten, gehärtet.

### BEISPIELE

### I. Herstellung der Emulgatoren (2)

1) 309 g technisches Polyethylenglykol mit einem mittleren Molgewicht (Mw) von 4000 g/mol und 34,1 g eines Polyglycidylethers auf Basis von Bisphenol A mit einem Epoxidäquivalentgewicht von 183 g/mol wurden zusammen auf 100 °C erhitzt und unter Rühren mit 0,35 ml 50%iger wäßriger Tetrafluorborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis das Epoxidäquivalentgewicht des Kondensationsproduktes ca. 350000 g/mol betrug. Nach Erkalten wies der Emulgator eine spröde, wachsartige feste Konsistenz auf.
2) 250 g des gemäß Beispiel I.1) hergestellten Kondensationsproduktes wurden unter Rühren und leichtem Erwärmen auf ca. 80 °C in 250 g Wasser gelöst. Die erhaltene hellgelbe, klare Emulgatorlösung wies eine Viskosität (gemessen nach Ubbelohde, 25 °C) von 3500 mPa.s und einen Festkörpergehalt von 50 % auf.
3) 250 g des gemäß Beispiel I.1) hergestellten Kondensationsproduktes wurden unter Rühren und leichtem Erwärmen auf ca. 70 °C in einer Mischung aus 125 g Wasser und 125 g 2-Propanol gelöst. Die erhaltene leicht gelbliche, klare Emulgatorlösung wies eine Viskosität (gemessen nach Ubbelohde, 25 °C) von 2300 mPa.s und einen Festkörpergehalt von 50 % auf.

### II. Herstellung der Dispersionen

1) In einem 1-l-Vierhalskolben, ausgerüstet mit Thermometer, Flügelrührer, Rückflußkühler und Tropftrichter wurden in einer Stickstoff-Schutzgasatmosphäre 58 g eines Polypropylenglykoldiglycidylethers mit einem Epoxidäquivalentgewicht von 330 g/mol und 91 g Bisphenol A unter Rühren auf 130 °C erwärmt. Nach Zugabe von 170 mg Katalysator 1201 der Firma Shell Chemie wurde weiter auf 160 °C erwärmt und bei dieser Temperatur gehalten, bis das Epoxidäquivalentgewicht des Umsetzungsproduktes mehr als 100000 g/mol betrug. Anschließend wurde auf 120 °C abgekühlt und bei dieser Temperatur 288 g eines Polyglycidylethers auf der Basis von Bisphenol A mit einem Epoxidäquivalentgewicht von 183 g/mol zugesetzt. Nach Zugabe von weiteren 200 mg des Katalysators 1201 wurde auf 160 °C erwärmt und bei dieser Temperatur gehalten, bis das Produkt ein Epoxidäquivalentgewicht von 460 g/mol aufwies. Danach kühlte man das Reaktionsgemisch auf 120 °C ab, setzte unter Rühren 37 g des gemäß Beispiel I.1) hergestellten Emulgators zu und ließ die Temperatur innerhalb von 1,5 Stunden auf 85 °C abfallen. Bei einer Rührgeschwindigkeit von ca. 600 Umdrehungen pro Minute wurden in einem Zeitraum von 15 Minuten gleichmäßig 150 g deionisiertes Wasser zudosiert, die anschließend unter Senkung der Temperatur auf 70 °C 60 Minuten verrührt wurden. Danach wurde die entstandene wäßrige Dispersion mit 260 g deionisiertem Wasser verdünnt. Die Dispersion hatte einen Festgehalt von 52,8 Gew.-% und wies eine Viskosität von 4400 mPa.s (gemessen nach Brookfield, Spindel 3, 12 UpM, 25 °C) sowie eine mittlere Teilchengröße von 579 nm (Photonenkorrelationsspektroskopie (PCS), monomodale Auswertung) auf.
2) In einem 1-l-Vierhalskolben, ausgerüstet mit Thermometer, Flügelrührer, Rückflußkühler und Tropftrichter wurden in einer Stickstoff-Schutzgasatmosphäre 58 g eines Polypropylenglykol-diglycidylethers mit einem Epoxidäquivalentgewicht von 330 g/mol und 91 g Bisphenol A unter Rühren auf 130 °C erwärmt. Nach Zugabe von 150 mg des Katalysators 1201 der Firma Shell Chemie wurde weiter auf 155 bis 160 °C erwärmt und bei dieser Temperatur gehalten, bis das Umsetzungsprodukt ein Epoxidäquivalentgewicht von mehr als 100000 g/mol aufwies. Anschließend wurde auf 120 bis 130 °C abgekühlt und 288 g eines Polyglycidylethers auf Basis von Bisphenol A mit einem Epoxidäquivalentgewicht von 183 g/mol sowie weitere 200 mg des Katalysators zugesetzt. Danach erhöhte man die Temperatur auf 160 °C und rührte, bis das Produkt ein Epoxidäquivalentgewicht von 460 bis 470 g/mol aufwies. Nach Abkühlung auf 90 bis 95 °C wurden 76 g des gemäß Beispiel I.2) hergestellten Emulgators zugesetzt und ca. 1,5 Stunden verrührt, wobei man die Temperatur auf 80 bis 85 °C fallen ließ. Bei einer Rührgeschwindigkeit von ca. 600 UpM wurden in einem Zeitraum von 15 Minuten 85 g deionisiertes Wasser zudosiert und bei 65 bis 75 °C verrührt. Nach 90 Minuten wurden weitere 165 g deionisiertes Wasser zudosiert und 60 Minuten verrührt. Schließlich wurde die entstandene wäßrige, lösemittelfreie Dispersion noch mit 75 g deionisiertem Wasser verdünnt und mit 900 mg des Konservierungsmittels Mergal K 9 N der Firma Riedel-de Haen versetzt. Die Dispersion hatte einen Festgehalt von 55,9 Gew.-% und wies eine Viskosität von 800 mPa.s (Brookfield, Spindel 3, 30 UpM, 25 °C) sowie eine mittlere Teilchengröße von 559 nm (PCS, monomodale Auswertung) auf.
3) In einem 1-l-Vierhalskolben, ausgerüstet mit Thermometer, Flügelrührer, Rückflußkühler und Tropftrichter wurden in einer Stickstoff-Schutzgasatmosphäre 59 g eines Polypropylenglykol-diglycidylethers mit einem Epoxidäquivalentgewicht von 330 g/mol und 91 g Bisphenol A unter Rühren auf 120 bis 125 °C erwärmt und anschließend 170 mg Katalysator 1201 der Firma Shell Chemie zugegeben. Danach erwärmte man auf 150 bis 160 °C und hielt das Reaktionsgemisch bei dieser Temperatur, bis das Epoxidäquivalentgewicht des Produktes größer als 100000 g/mol war. Nach Abkühlung auf 120 bis 130 °C wurden 288 g eines Polyglycidylethers auf der Basis von Bisphenol A mit einem Epoxidäquivalentgewicht von 183 g/mol sowie weitere 150 mg des Katalysators zugegeben und erneut auf 150 bis 160 °C erwärmt. Man hielt bei dieser Temperatur, bis das Kondensationsprodukt ein Epoxidäquivalent von 460 bis 470 g/mol aufwies und kühlte dann auf 95 °C ab. Unter guter Rührung wurden nun 76 g des gemäß Beispiel I.3) hergestellten Emulgators zugesetzt und 60 Minuten verrührt, wobei die Temperatur auf 75 bis 80 °C abfiel. Bei einer Rührgeschwindigkeit von ca. 600 UpM wurden dann in 15 Minuten 70 g deionisiertes Wasser gleichmäßig zudosiert und 45 Minuten verrührt. Danach wurden bei 65 °C weitere 90 g deionisiertes Wasser zudosiert und 60 Minuten verrührt. Schließlich wurde die entstandene wäßrige Dispersion noch mit weiteren 190 g deionisiertem Wasser verdünnt und mit 900 mg Mergal K 9 N der Firma Riedelde Haen versetzt. Die fertige Dispersion wies einen Festgehalt von 52,4 Gew.-%, eine Viskosität von 2300 mPa.s (Brookfield, Spindel 3, 12 UpM, 25 °C) sowie eine mittlere Teilchengröße von 298 nm (PCS, monomodale Auswertung) auf.
4) In einem 1-l-Vierhalskolben, ausgerüstet mit Thermometer, Flügelrührer, Rückflußkühler und Tropftrichter wurden unter Stickstoff als Schutzgas 37 g eines Polypropylenglykol-diglycidylethers mit einem Epoxidäquivalentgewicht von 330 g/mol, 11 g Bisphenol A und 109 g Tetrabrombisphenol A unter Rühren auf 120 °C erwärmt. Nach Zugabe von 100 mg des Katalysators 1201 der Firma Shell Chemie wurde weiter auf 160 °C erwärmt und bei dieser Temperatur gehalten, bis das Epoxidäquivalentgewicht des Umsetzungsproduktes mehr als 60000 g/mol betrug. Anschließend wurde auf 120 °C abgekühlt, 182 g eines Polyglycidylethers auf der Basis von Bisphenol A mit einem Epoxidäquivalentgewicht von 183 g/mol sowie weitere 130 mg des Katalysators zugegeben und erneut auf 160 bis 170 °C erwärmt. Nachdem das Kondensationsprodukt ein Epoxidäquivalent von 590 g/mol aufwies, wurde abgekühlt und bei einer Temperatur von 90 °C 76 g des Emulgators gemäß Beispiel I.3) zugesetzt. Der Emulgator wurde 60 Minuten verrührt, wobei weiter auf 75 °C gekühlt wurde, danach wurden bei einer Rührgeschwindigkeit von 600 UpM 54 g deionisiertes Wasser zudosiert und 90 Minuten verrührt. Anschließend erfolgte Zugabe von weiteren 73 g deionisiertem Wasser, die bei 50 bis 60 °C 90 Minuten verrührt wurden. Die wäßrige Dispersion wurde schließlich mit weiteren 144 g deionisiertem Wasser verdünnt. Die Dispersion wies einen Festgehalt von 55 Gew.-%, eine Viskosität von 1700 mPa.s (Brookfield, Spindel 2, 12 UpM, 25 °C) sowie eine mittlere Teilchengröße von 790 nm (PCS, monomodale Auswertung) auf.
5) In einem mit Tropftrichter, Flügelrührer, Rückflußkühler und Thermometer ausgerüsteten 1-l-Vierhalskolben wurden in einer Stickstoff-Schutzgasatmosphäre 81 g Bisphenol A und 48 g eines Polypropylenglykol-diglycidylethers mit einem Epoxidäquivalentgewicht von 330 g/mol unter Rühren auf 120 bis 130 °C erwärmt. Nach Zugabe von 400 mg Triphenylphosphin wurde weiter auf 160 bis 170 °C erwärmt und bei dieser Temperatur gehalten, bis das Epoxidäquivalentgewicht des Kondensationsproduktes mehr als 70000 g/mol betrug. Danach wurde auf 120 °C abgekühlt, weiter 172 g eines Polyglycidylethers auf der Basis von Bisphenol A mit einem Epoxidäquivalentgewicht von 183 g/mol zugegeben und anschließend wieder auf 160 bis 170 °C erwärmt, bis das Produkt ein Epoxidäquivalentgewicht von 795 g/mol aufwies. Nachdem das Reaktionsgemisch auf 90 bis 95 °C abgekühlt worden war, wurden 67 g des gemäß Beispiel I.2) hergestellten Emulgators zugesetzt und 90 Minuten gut verrührt, wobei die Temperatur auf 75 bis 80 °C sank. Anschließend wurden bei Rührgeschwindigkeit von ca. 600 UpM 80 g deionisiertes Wasser zudosiert und 70 Minuten verrührt. Nach Senkung der Temperatur auf 65 bis 70 °C wurden weitere 120 g deionisiertes Wasser zudosiert und 60 Minuten verrührt. Schließlich wurde die wäßrige, lösemittelfreie Dispersion noch mit 40 g deionisiertem Wasser verdünnt und mit 800 mg Mergal K 9 N der Firma Riedel-de Haen (Konservierungsmittel) versetzt. Die Dispersion hatte einen Festgehalt von 54,8 Gew.-%, eine Viskosität von 400 mPa.s (Brookfield, Spindel 2, 12 UpM, 25 °C) und eine mittlere Teilchengröße von 731 nm (PCS, monomodale Auswertung).
6) In einem 1-l-Vierhalskolben, ausgerüstet mit Thermometer, Flügelrührer, Rückflußkühler und Tropftrichter wurden unter Stickstoff als Schutzgas 58 g eines Polypropylenglykol-diglycidylethers mit einem Epoxidäquivalentgewicht von 330 g/mol und 93,5 g Bisphenol A unter Rühren auf 120 °C erwärmt. Nach Zugabe von 150 mg des Katalysators 1201 der Firma Shell Chemie wurde weiter auf 160 °C erwärmt und bei dieser Temperatur gehalten, bis das Epoxidäquivalentgewicht des Umsetzungsproduktes größer als 78000 g/mol war. Anschließend wurde auf 120 °C abgekühlt, 142 g eines Polyglycidylethers auf der Basis von Bisphenol A mit einem Epoxidäquivalentgewicht von 183 g/mol, 142,5 g Eurepox^{(R)} RV-C der Fa. Schering AG (Diglycidylether von Cyclohexandimethanol, Epoxidäquivalentgewicht 174 g/mol) sowie weitere 200 mg des Katalysators zugegeben und erneut auf 160 bis 170 °C erwärmt. Nachdem das Kondensationsprodukt ein Epoxidäquivalent von 460 g/mol aufwies, wurde abgekühlt und bei einer Temperatur von 75 °C 71 g des Emulgators gemäß Beispiel I.3) zugesetzt. Der Emulgator wurde 60 Minuten verrührt, wobei weiter auf 75 °C gekühlt wurde, danach wurden bei einer Rührgeschwindigkeit von 600 UpM 110 g deionisiertes Wasser zudosiert und 90 Minuten verrührt. Anschließend erfolgte Zugabe von weiteren 75 g deionisiertem Wasser, die bei 50 bis 60 °C 90 Minuten verrührt wurden. Die wäßrige Dispersion wurde schließlich mit weiteren 155 g deionisiertem Wasser verdünnt. Die Dispersion wies einen Festgehalt von 54,0 Gew.-%, eine Viskosität von 1950 mPa.s (Brookfield, Spindel 2, 12 UpM, 25 °C) sowie eine mittlere Teilchengröße von 506 nm (PCS, monomodale Auswertung) auf.
7) In einem mit Tropftrichter, Flügelrührer, Rückflußkühler und Thermometer ausgerüsteten 1-l-Vierhalskolben wurden unter Stickstoff 61 g Bisphenol A und 58 g eines Polypropylenglykol-diglycidylethers mit einem Epoxidäquivalentgewicht von 330 g/mol unter Rühren auf 120 bis 130 °C erwärmt. Nach Zugabe von 150 mg des Katalysators 1201 der Fa. Shell Chemie wurde weiter auf 160 bis 165 °C erwärmt und bei dieser Temperatur gehalten, bis das Epoxidäquivalentgewicht des Kondensationsproduktes mehr als 60000 g/mol betrug. Danach wurde auf 120 °C abgekühlt, weiter 158,5 g eines Polyglycidylethers auf der Basis von Bisphenol A (Epoxidäquivalentgewicht 183 g/mol), 158,5 g des Epoxidharzes XU 71891.00 der Fa. DOW Deutschland Inc. (Diglycidylether eines Umsetzungsproduktes von Bisphenol A und Propylenoxid, Epoxidäquivalentgewicht 340 g/mol) sowie 200 mg des genannten Katalysators zugegeben und anschließend wieder auf 160 bis 165 °C erwärmt, bis das Produkt ein Epoxidäquivalentgewicht von 450 g/mol aufwies. Nachdem das Reaktionsgemisch auf 90 bis 95 °C abgekühlt worden war, wurden 76 g des gemäß Beispiel I.2) hergestellten Emulgators zugesetzt und 90 Minuten gut verrührt, wobei die Temperatur auf 80 bis 85 °C abfiel. Anschließend wurden bei einer Rührgeschwindigkeit von ca. 600 UpM 65 g deionisiertes Wasser zudosiert und 60 Minuten verrührt. Schließlich wurde die wäßrige, lösemittelfreie Dispersion noch mit 185 g deionisiertem Wasser verdünnt und mit 860 g Mergal K 9 N der Firma Riedel-de Haen (Konservierungsmittel) versetzt. Die Dispersion hatte einen Festgehalt von 53,8 Gew.-%, eine Viskosität von 1200 mPa.s (Brookfield, Spindel 2, 12 UpM, 25 °C) und eine mittlere Teilchengröße von 359 nm (PCS, monomodale Auswertung).

### III. Anwendungstechnische Prüfungen

Nach dem erfindungsgemäßen Verfahren hergestellten Dispersionen (Beispiele II.3, II.6 und II.7) sowie eine Dispersion gemäß dem Stande der Technik (DE 36 43 751) wurden einigen anwendungstechnischen Prüfungen unterzogen, deren Ergebnisse in den beiden nachstehenden Tabellen zusammengefaßt sind:

**Tabelle 1**

| | Erfindungsgem. Bsp. II.3) | Dispersionen Bsp. II.6 |
|---|---|---|
| Dispersion | 100 Teile | 100 Teile |
| Härtungsmittel gemäß EP 0 000 605; Bsp. 5c | 16,5 Teile | 22 Teile |
| Staubtrocken (Raumtemp.) | 150 min | 200 min |
| Klebfrei (Raumtemp.) | 240 min | 360 min |
| Pendelhärte nach 24 h | 90 s | 30 s |
| Pendelhärte nach 7 d | 170 s | 57 s |
| Filmtrübung nach | 2 h | 2,5 h |
| Wasserbeständigkeit nach 24 h Lagerung | 1 | 0-1 |
| Naßfilmhaftung nach 500 h Tropentest | Gt 1 | Gt 1 |
| Erichsentiefg. n. 1 Woche | 9 mm | 10 mm |
| Erichsentiefg. n. 4 Wochen | 7 mm | 10 mm |

| | Erfdgsgem. Dispers. Bsp. II.7 | gemäß DE3643751 |
|---|---|---|
| Dispersion | 100 Teile | 100 Teile |
| Härtungsmittel gemäß EP 0 000 605; Bsp. 5c | 20 Teile | 20 Teile |
| Staubtrocken (Raumtemp.) | 200 min | 45 min |
| Klebfrei (Raumtemp.) | 360 min | 110 min |
| Pendelhärte nach 24 h | 25 s | 75 s |
| Pendelhärte nach 7 d | 48 s | 145 s |
| Filmtrübung nach | 2,5 h | 3,5 h |
| Wasserbeständigkeit nach 24 h Lagerung | 0-1 | 1 |
| Naßfilmhaftung nach 500 h Tropentest | Gt 1 | Gt 4 |
| Erichsentiefg. n. 1 Woche | 10 mm | 3 mm |
| Erichsentiefg. n. 4 Wochen | 9 mm | 1 mm |

### Erläuterung der Prüfungsbedingungen:

1. Staubtrocken: Auf den Film gestreute Glasperlen lassen sich nach der Aushärtung nicht mehr mit einem Pinsel entfernen.
2. Klebfrei: Die Glasperlen lassen sich nach der Aushärtung mit einem Pinsel entfernen.
3. Pendelhärte nach König: DIN 53 157.
4. Filmtrübung: Nach dem Mischen von Härter und Dispersion werden halbstündlich Filme mit einer Naßfilmdicke von 200 µm aufgezogen. Das Auftreten einer Trübung im Film nach Aushärtung zeigt das Ende der Verarbeitungszeit an und wird als Prüfergebnis festgehalten.
5. Wasserbeständigkeit nach 24 h, Lagerung bei Raumtemperatur: Auf Glasplatten mit 200 µm Naßfilmdicke aufgezogene Filme werden nach 24 h Lagerung in Wasser bei Raumtemperatur geprüft. Die Bewertungsskala reicht von 1 = sehr gut bis 5 = schlecht.
6. Naßfilmhaftung: Pigmentierte Lacke werden auf dekapitiertem Eisenblech gespritzt, so daß eine Trockenfilmdicke von ca. 50 bis 60 µm resultiert. Nach sieben Tagen Trocknung werden die beschichteten Bleche einem Tropentest (40 °C, 100 % rel. Feuchte) unterworfen. Nach 500 Stunden Belastung werden die Bleche entnommen und 2 Stunden bei Raumtemperatur gelagert, anschließend wird die Haftung mittels Gitterschnitt geprüft (ISO 2409).
7. Bestimmung der Elastizität nach DIN ISO 1520, "Erichsen-Tiefung": Die beschichteten Bleche werden nach 7 und 14 Tagen sowie nach 4 Wochen Trocknung im Tiefungsprüfgerät nach Erichsen untersucht. Die Tiefung wird abgebrochen, wenn die Lackoberfläche den ersten Riß zeigt oder der Film sich vom Untergrund ablöst. Der Tiefungswert wird in mm angegeben.

## Patentansprüche

1. Verfahren zur Herstellung von wäßrigen Epoxidharz-Dispersionen, dadurch gekennzeichnet, daß in der ersten Stufe ein Epoxidharz (1) durch Kondensation eines Gemisches bestehend aus
(1a) 50 bis 95 Gew.-% einer oder mehrerer Epoxidverbindungen mit im Mittel mindestens einer Epoxidgruppe pro Molekül und einem Epoxidäquivalentgewicht von 90 bis 3000 g/mol und
(1b) 5 bis 50 Gew.-% eines aromatischen Polyols
bei 100 bis 220 °C in Gegenwart eines Katalysators hergestellt wird;
anschließend in der zweiten Stufe bei einer Temperatur von 60 bis 200 °C dem Epoxidharz (1) ein Emulgator (2) zugegeben wird, enthaltend ein Kondensationsprodukt (2a) von
- einem aliphatischen Polyol mit einem mittleren Molekülargewicht (Mw) von 200 bis 20000 g/mol, und
- einer Epoxidverbindung mit mindestens zwei Epoxidgruppen pro Molekül und einem Epoxidäquivalentgewicht von 90 bis 3000 g/mol,
wobei das Äquivalentverhältnis der OH-Gruppen zu den Epoxidgruppen 1 : 0,85 bis 1 : 1,5 ist und das Epoxidäquivalentgewicht dieses Kondensationsproduktes zwischen 5000 und 400000 g/mol liegt, und schließlich
in der letzten Stufe Wasser (4) in der an 100 Gew.-% fehlenden Menge unter kräftigem Rühren hinzugegeben wird, wobei der Anteil des Epoxidharzes (1) an dem Gewicht der gesamten Dispersion 20 bis 75 %, und der Anteil des Emulgators (2) an dem Gewicht der gesamten Dispersion 3 bis 20 % beträgt, und der Emulgator (2) Massenanteile von 20 bis 100 % des Kondensationsprodukts (2a), 0 bis 50 % eines organischen Lösungsmittels und 0 bis 80 % Wasser enthält.

2. Verfahren nach Anspruch 1, dadurch gekennzeichnet, daß das Epoxidharz (1) zunächst mit dem Emulgator (2) sowie gegebenenfalls organischen Lösungsmitteln (3) and anschließend mit Wasser (4) verrührt wird.

3. Verfahren nach Anspruch 1, dadurch gekennzeichnet, daß anschließend an den ersten Schritt der Emulgator (2) und gegebenenfalls ein organisches Lösungsmittel (3) zu dem Epoxidharz zugegeben wird, die Mischung während 15 bis 180 Minuten verrührt wird und anschließend das Wasser (4) unter kräftigem Rühren zudosiert wird.

4. Verfahren nach Anspruch 1, dadurch gekennzeichnet, daß das Epoxidharz (1) ein Epoxidäquivalentgewicht von 350 bis 4000 g/mol besitzt.

5. Verfahren nach Anspruch 1, dadurch gekennzeichnet, daß das Kondensationsprodukt (2a) ein Epoxidäquivalentgewicht von mindestens 5000 g/mol besitzt.

6. Verfahren nach Anspruch 1, dadurch gekennzeichnet, daß die Menge an Emulgator (2) 4 bis 15 %, bezogen auf das Gewicht der gesamten Dispersion, beträgt.

7. Verfahren nach Anspruch 1, dadurch gekennzeichnet, daß die Kondensationsreaktion in der ersten Stufe so durchgeführt wird, daß in einer ersten Reaktion eine oder mehrere Komponente (1a) mit den Komponente gemäß (1b) so umgesetzt werden, daß das erste Kondensationsprodukt ein Epoxidäquivalentgewicht von größer als 5000 g/mol besitzt und noch freie phenolische OH-Gruppen aufweist, und in einer weiteren Kondensationsreaktion dieses erste Kondensationsprodukt mit weiteren Epoxidverbindungen gemäß (1a) zu dem Epoxidharz (1) umgesetzt wird.

## Claims

1. A process for preparing aqueous epoxy resin dispersions, which comprises in the first stage preparing an epoxy resin (1) by condensing a mixture consisting of
(1a) from 50 to 95% by weight of one or more epoxy compounds having on average at least one epoxy group per molecule and an epoxide equivalent weight of from 90 to 3000 g/mol, and
(1b) from 5 to 50% by weight of an aromatic polyol
at from 100 to 220°C in the presence of a catalyst;
subsequently, in the second stage, adding to the epoxy resin (1) at a temperature of from 60 to 200°C an emulsifier (2) comprising a condensation product (2a) of
- an aliphatic polyol having an average molecular weight (Mw) of from 200 to 20,000 g/mol, and
- an epoxy compound having at least two epoxy groups per molecule and an epoxide equivalent weight of from 90 to 3000 g/mol,
the ratio of equivalents of the OH groups to the epoxy groups being from 1:0.85 to 1:1.5 and the epoxide equivalent weight of this condensation product being between 5000 and 400,000 g/mol, and finally,
in the last stage, adding water (4) in the amount required to make up to 100% by weight, with vigorous stirring, the weight fraction of the epoxy resin (1) in the overall dispersion being from 20 to 75% and the weight fraction of the emulsifier (2) in the overall dispersion being from 3 to 20%, and the emulsifier (2) including mass fractions of from 20 to 100% of the condensation product (2a), from 0 to 50% of an organic solvent, and from 0 to 80% of water.

2. The process as claimed in claim 1, wherein the epoxy resin (1) is first of all stirred together with the emulsifier (2) and, if desired, with organic solvents (3) and subsequently with water (4).

3. The process as claimed in claim 1, wherein, following the first step, the emulsifier (2) and, if desired, an organic solvent (3) is added to the epoxy resin, the mixture is stirred for from 15 to 180 minutes, and then the water (4) is metered in with vigorous stirring.

4. The process as claimed in claim 1, wherein the epoxy resin (1) has an epoxide equivalent weight of from 350 to 4000 g/mol.

5. The process as claimed in claim 1, wherein the condensation product (2a) has an epoxide equivalent weight of at least 5000 g/mol.

6. The process as claimed in claim 1, wherein the amount of emulsifier (2) is from 4 to 15%, based on the weight of the overall dispersion.

7. The process as claimed in claim 1, wherein the condensation reaction in the first stage is carried out such that in a first reaction one or more components (1a) is or are reacted with the component according to (1b) such that the first condensation product has an epoxide equivalent weight of more than 5000 g/mol and still contains free phenolic OH groups and in a further condensation reaction this first condensation product is reacted with further epoxy compounds according to (1a) to give the epoxy resin (1).

## Revendications

1. Procédé de préparation de dispersions aqueuses de résines époxy, caractérisé en ce que, dans la première étape, on prépare une résine époxy (1) par condensation d'un mélange constitué de
(1a) 50 à 95 % en masse d'un ou plusieurs composés époxydiques ayant en moyenne un groupe époxyde par molécule et une masse équivalente époxydique de 90 à 3 000 g/mol et
(1b) 5 à 50 % en masse d'un polyol aromatique,
à une température de 100 à 220°C, en présence d'un catalyseur ;
puis, dans la deuxième étape, on ajoute à la résine époxy (1), à une température de 60 à 200°C, un émulsionnant (2) contenant un produit de condensation (2a)
- d'un polyol aliphatique ayant une masse molaire moyenne (Mw) de 200 à 20 000 g/mol et
- d'un composé époxydique ayant au moins deux groupes époxyde par molécule et une masse équivalente époxydique de 90 à 3 000 g/mol,
le rapport en équivalents des groupes OH aux groupes époxyde étant de 1 : 0,85 à 1 : 1,5 et la masse équivalente époxydique de ce produit de condensation étant comprise entre 5 000 et 400 000,
et enfin, dans la dernière étape, on ajoute en agitant vigoureusement de l'eau (4) en la quantité nécessaire pour compléter à 100 %,
la fraction de résine époxy (1) par rapport à la masse de la dispersion totale étant de 20 à 75 % et la fraction d'émulsionnant (2) par rapport à la masse de la dispersion totale étant de 3 à 20 %, et l'émulsionnant (2) contenant des proportions en masse de 20 à 100 % du produit de condensation (2a), 0 à 50 % d'un solvant organique et 0 à 80 % d'eau.

2. Procédé selon la revendication 1, caractérisé en ce que l'on mélange d'abord la résine époxy (1) avec l'émulsionnant (2) et éventuellement des solvants organiques (3), puis avec l'eau (4).

3. Procédé selon la revendication 1, caractérisé en ce que, après la première étape, on ajoute l 'émulsionnant (2) et éventuellement un solvant organique (3) à la résine époxy, on homogénéise le mélange pendant 15 à 180 minutes, puis on ajoute de façon dosée l'eau (4) en agitant vigoureusement.

4. Procédé selon la revendication 1, caractérisé en ce que la résine époxy (1) a une masse équivalente époxydique de 350 à 4 000 g/mol.

5. Procédé selon la revendication 1, caractérisé en ce que le produit de condensation (2a) a une masse équivalente époxydique d'au moins 5 000 g/mol.

6. Procédé selon la revendication 1, caractérisé en ce que la quantité d'émulsionnant (2) est de 4 à 15 % par rapport à la masse de la dispersion totale.

7. Procédé selon la revendication 1, caractérisé en ce que l'on effectue la réaction de condensation dans la première étape en faisant réagir dans une première réaction un ou plusieurs constituants (1a) avec les constituants (1b) de façon que le premier produit de condensation ait une masse équivalente époxydique supérieure à 5 000 g/mol et garde encore des groupes OH phénoliques libres, et en faisant réagir dans une autre réaction de condensation ce premier produit de condensation avec d'autres composés époxydes selon (1a) pour former la résine époxy (1).
